# EUROPEAN PATENT APPLICATION

(11) **EP 3 235 657 A1**
(43) Date of publication of application: **25.10.2017**
(21) Application number: 17160560.3
(22) Date of filing: 13.03.2017
(51) Int. Cl.: B60B 3/02, B60B 21/12

(54) **HEAT-INSULATED WHEEL**

(30) Priority: 08.04.2016 US 201615094127
(71) Applicant: Goodrich Corporation, Charlotte, NC 28217-4578 (US)
(72) Inventor: WYSZOWSKI, Adam, 51-166 Wroclaw (PL)
(74) Representative: Iceton, Greg James

(57) **Abstract**

Systems and methods for a heat-insulated wheel are disclosed herein. A wheel (310) may comprise a wheel body comprising an outer diameter surface, an inner rim (317) on an inboard side of the wheel body, an outer rim (318) on an outboard side of the wheel body opposite the inner rim, and a heat insulator (340) coupled to the outer diameter surface between the inner rim (317) and the outer rim (318).

## Description

### FIELD

The present disclosure relates generally to heat-insulated wheels.

### BACKGROUND

During braking, such as during an aircraft landing or taxi stop, the friction between rotors and stators of a brake system in a wheel assembly create heat which may spread throughout the wheel and into the tire cavity. The tire cavity may comprise compressed nitrogen gas. The nitrogen gas being heated by heat created by the rotors and stators may increase the tire pressure, and in some cases, could cause a tire explosion. Therefore, it would be beneficial to insulate the nitrogen gas within the tire cavity from heat created by the rotors and stators of the wheel brake system.

### SUMMARY

According to various embodiments, a wheel may comprise a wheel body comprising an outer diameter surface, an inner rim on an inboard side of the wheel body, an outer rim on an outboard side of the wheel body opposite the inner rim, and/or a heat insulator coupled to the outer diameter surface between the inner rim and the outer rim. In various embodiments, the wheel may comprise a recess disposed in the outer diameter surface. The heat insulator may be disposed within the recess.

In various embodiments, the heat insulator may comprise a mineral fiber, such as stone wool. In various embodiments, the heat insulator may comprise a high temperature insulation wool, such as alkaline earth silicate wool and/or alumino silicate wool. In various embodiments, the heat insulator may comprise carbon fiber and/or asbestos.

In various embodiments, a wheel assembly may comprise a wheel body comprising an outer diameter surface, an inner rim on an inboard side of the wheel body, an outer rim on an outboard side of the wheel body opposite the inner rim, a heat insulator coupled to the outer diameter surface, and/or a tire comprising a tire perimeter and a tire cavity. The tire may be disposed circumferentially around the wheel body between the inner rim and the outer rim, wherein the tire cavity may be defined by the tire perimeter and the outer diameter surface. The heat insulator may disposed between the outer diameter surface and the tire cavity.

In various embodiments, the wheel body may comprise an inboard wheel half and an outboard wheel half. In various embodiments, a recess may be disposed in the outer diameter surface. The heat insulator may be disposed within the recess. In various embodiments, the heat insulator may comprise a mineral fiber, such as stone wool, and/or a high temperature insulation wool, such as alkaline earth silicate wool and/or alumino silicate wool. In various embodiments, the heat insulator may comprise carbon fiber and/or asbestos.

In various embodiments, the wheel assembly may comprise an insulator fastening device disposed circumferentially around the wheel body between the tire cavity and the heat insulator, wherein the insulator fastening device may be coupled to the heat insulator.

In various embodiments, a method of assembling a wheel may comprise providing a wheel, comprising a wheel body and an outer diameter surface, and disposing a heat insulator circumferentially onto the outer diameter surface of the wheel. In various embodiments, the method may comprise coupling an outboard wheel half to an inboard wheel half to form the wheel body. In various embodiments, the method may comprise coupling an insulator fastening device circumferentially around the heat insulator. During the disposing, the heat insulator may comprise a mineral fiber, a high temperature insulation wool, carbon fiber, and/or asbestos.

### BRIEF DESCRIPTION OF DRAWINGS

The present disclosure may be better understood with reference to the following drawing figures and description. Non-limiting and non-exhaustive descriptions are described with reference to the following drawing figures. The components in the figures are not necessarily to scale, emphasis instead being placed upon illustrating principles. Throughout the figures, elements with the like element numbering are intended to be the same, unless otherwise specified, and will not be repeated for the sake of clarity.
FIG. 1 illustrates a cross sectional view of an upper part of a wheel assembly depicting the temperature distribution, in accordance with various embodiments
FIG. 2 illustrates a perspective view of a wheel assembly, in accordance with various embodiments;
FIG. 3 illustrates a cross sectional view of a wheel assembly, in accordance with various embodiments;
FIGS. 4A and 4B illustrate perspective views of a wheel comprising an insulator fastening device, in accordance with various embodiments;
FIGS. 5A and 5B illustrate perspective views of the ends of an insulator fastening device, in accordance with various embodiments;
FIG. 6A illustrates a portion of the interface between the tire cavity and the outer diameter surface of a wheel without a heat insulator, depicting the temperature distribution, in accordance with various embodiments.
FIG. 6B illustrates a portion of the interface between the tire cavity and a heat insulator disposed on the outer diameter surface of a wheel, depicting the temperature distribution, in accordance with various embodiments;
FIG. 7A illustrates a cross sectional view of a tire cavity in a wheel assembly with no heat insulator, depicting the temperature distribution, in accordance with various embodiments; and
FIG. 7B illustrates a cross sectional view of a tire cavity in a wheel assembly with a heat insulator, depicting the temperature distribution, in accordance with various embodiments;
FIG. 8 illustrates an exploded view of a wheel assembly, in accordance with various embodiments; and
FIGS. 9A and 9B illustrate methods for assembling a wheel assembly, in accordance with various embodiments.

### DETAILED DESCRIPTION

All ranges may include the upper and lower values, and all ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact.

In the context of the present disclosure, systems and methods may find particular use in connection with aircraft wheels and wheel assemblies. However, various aspects of the disclosed embodiments may be adapted for optimized performance with a variety of wheels and wheel assemblies. As such, numerous applications of the present disclosure may be realized.

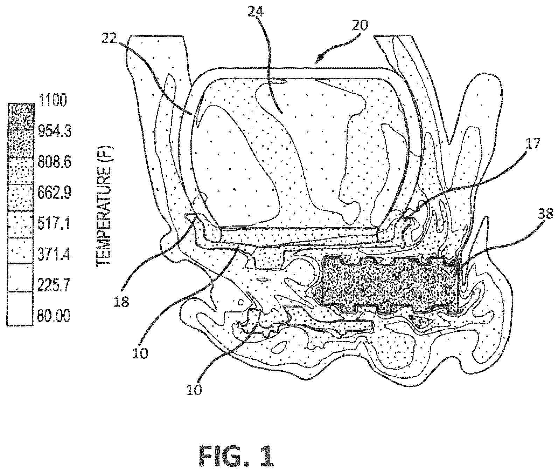

Referring to FIG. 1, a cross sectional view of a wheel assembly with surrounding air is depicted showing a temperature distribution. The wheel assembly may comprise a wheel 10, a tire 20, and a disk brake assembly 38. Disk brake assembly 38 may comprise friction disks, which, during braking, are pressed against one another to slow the wheel, and in doing so create a large amount of heat (e.g., causing brake components' temperatures to rise to 1100°F (593°C) or higher). Wheel 10 may comprise an outer rim 18 and an inner rim 17. A tire 20 may be disposed between outer rim 18 and inner rim 17. Tire 20 may comprise a tire perimeter 22 which encloses a tire cavity 24 between tire perimeter 22 and wheel 10. Tire cavity 24 may comprise compressed nitrogen gas, or any other suitable gas.

With further reference to FIG. 1, the temperature distribution within the wheel assembly, for a steady state simulation, is shown during wheel and brake system operation, wherein the temperature is highest within disk brake assembly 38, at a temperature about 1100°F (593°C). Heat may travel from disk brake assembly 38 into wheel 10 and/or tire cavity 24, with components of wheel 10 and tire 20 closer to disk brake assembly 38 having greater temperatures. In the simulation example depicted in FIG. 1, tire cavity 24 may reach temperatures of about 400°F (204°C) and above. As used in this context only, "about" means plus or minus 100°F (54°C). Increased temperature within tire cavity 24 may cause an increase in the pressure of the nitrogen gas within tire cavity 24. Such an increased temperature and pressure within tire cavity 24 may result in undesirable events, such as a tire explosion.

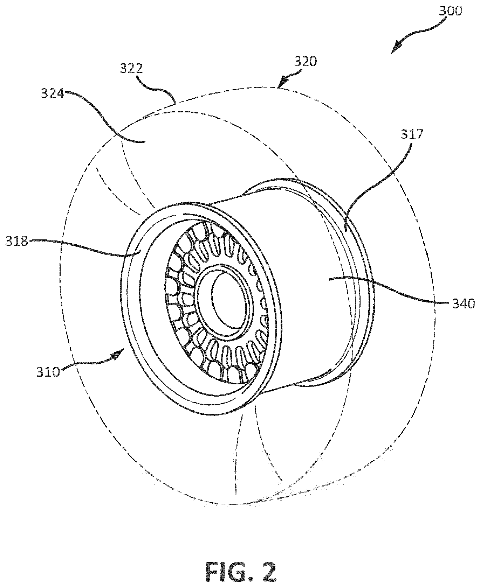

In various embodiments, with reference to FIG. 2, a wheel assembly 300 may comprise a wheel 310, a tire 320, and/or a heat insulator 340 coupled to wheel 310. Tire 320 may comprise tire perimeter 322 and/or a tire cavity 324. Tire cavity 324 may comprise compressed nitrogen gas or any other suitable gas. Wheel 310 may comprise an outer rim 318 and an inner rim 317, between which tire 320 is disposed. A heat insulator 340 may be coupled circumferentially to wheel 310 between outer rim 318 and inner rim 317. With momentary reference to FIGS. 1 and 2, heat insulator 340 may be configured to decrease a heat transfer from disk brake assembly 38 to tire cavity 324 during braking so as to prevent, or allow less of, the heat created by disk brake assembly 38 from traveling into tire cavity 324.

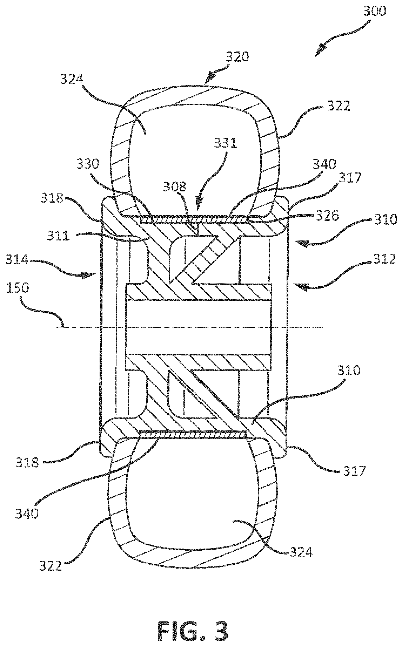

FIG. 3 illustrates a cross sectional view of wheel assembly 300, in accordance with various embodiments. The various components of wheel assembly 300 may be circumferentially disposed about axis of rotation 150. In various embodiments, wheel 310 may comprise a wheel body 311. Wheel body 311 may comprise an inboard side 312 and an outboard side 314. Inner rim 317 may be disposed on inboard side 312 of wheel body 311 and outer rim 318 may be disposed on outboard side 314 of wheel body 311.

In various embodiments, wheel body 311 may comprise an outer diameter surface 330 between inner rim 317 and outer rim 318. Outer diameter surface 330 may be the radially outward-most surface of wheel body 311 from axis of rotation 150. In various embodiments, heat insulator 340 may be coupled to outer diameter surface 330 between inner rim 317 and outer rim 318. In various embodiments, heat insulator 340 may span the entire length of outer diameter surface 330. In various embodiments, heat insulator 340 may span only a portion of outer diameter surface 330. Heat insulator 340 may be disposed on any portion of outer diameter surface 330, such as in the center of outer diameter surface 330 or any distance toward inner rim 317 or outer rim 318 along outer diameter surface 330. In various embodiments, heat insulator 340 may have a uniform thickness across outer diameter surface 330. In various embodiments, heat insulator 340 may be thicker (thickness, or thinness, being the radial length of heat insulator 340 measured substantially perpendicular to axis of rotation 150) toward the center of outer diameter surface 330 and may gradually get thinner (i.e., decreasing the radial length of heat insulator 340) toward inner rim 317 and/or outer rim 318. In various embodiments, heat insulator 340 may be thicker toward inner rim 317 and may gradually get thinner toward outer rim 318, and/or heat insulator 340 may be thicker toward outer rim 318 and may gradually get thinner toward inner rim 317. In various embodiments, heat insulator 340 may be thicker toward inner rim 317 and outer rim 318 and may gradually get thinner toward the center of outer diameter surface 330.

In various embodiments, outer diameter surface 330 may comprise a recess 326. Heat insulator 340 may be disposed within recess 326. Recess 326 may be of a shape complementary to heat insulator 340, and heat insulator and recess 326 may be any suitable shape. Similar to the placement, shape and/or thickness of heat insulator 340, recess 326 may be disposed anywhere along outer diameter surface 330. For example, recess 326 may be disposed in the center 331 of outer diameter surface 330 or any distance toward inner rim 317 and/or outer rim 318 (i.e., any axial position along outer diameter surface 330 parallel to axis of rotation 150). In various embodiments, recess 326 may have a uniform depth across outer diameter surface 330. In various embodiments, recess 326 may be deeper (depth, or shallowness, being the radial length of recess 326 measured substantially perpendicular to axis of rotation 150) toward the center of outer diameter surface 330 and shallower toward inner rim 317 and/or outer rim 318. In various embodiments, recess 326 may be deeper toward inner rim 317 and may gradually get shallower toward outer rim 318, and/or recess 326 may be deeper toward outer rim 318 and may gradually get shallower toward inner rim 317. In various embodiments, recess 326 may be deeper toward inner rim 317 and outer rim 318 and may gradually get shallower toward the center of outer diameter surface 330.

In various embodiments, heat insulator 340 may be comprised of any suitable material, for example, a material having low thermal conductivity, low infrared radiation transparency, high resistance to high temperatures, low weight, and/or ease in handling. In various embodiments, heat insulator 340 may be comprised of a mineral fiber, for example, stone wool, glass wool, and/or slag wool. In various embodiments, heat insulator 340 may be comprised of a high temperature insulation wool, for example, alkaline earth silicate wool, alumino silicate wool, and/or polycrystalline wool. In various embodiments, heat insulator 340 may be comprised of carbon fiber and/or asbestos. In various embodiments, heat insulator 340 may comprise two or more materials, including, but not limited to, any of the materials discussed herein. In various embodiments, heat insulator 340 may comprise multiple layers of one or more materials.

In various embodiments, heat insulator 340 may be coupled to wheel 310 in any suitable manner. For example, heat insulator 340 may be coupled to wheel 310 by welding, riveting, nailing, screwing, an adhesive, the tension of heat insulator 340 around wheel 310, and/or in any other suitable manner.

In various embodiments, wheel assembly 300 may comprise a fuse plug 308 spanning from tire cavity 324 through wheel body 311 to a radially-inward part of wheel 310. Fuse plug 308 may be configured to melt in response to wheel body 311 reaching a certain temperature. In response to fuse plug 308 melting, compressed gas in tire cavity 324 may be able to escape through fuse plug 308 to avoid creating pressure under such a temperature that may cause a tire explosion. In various embodiments in which wheel assembly 300 comprises fuse plug 308, heat insulator 340 would comprise a hole radially outward of, and in line with, fuse plug 308, which may allow compressed gas to leave tire cavity 324 in case of excess pressure within tire cavity 324.

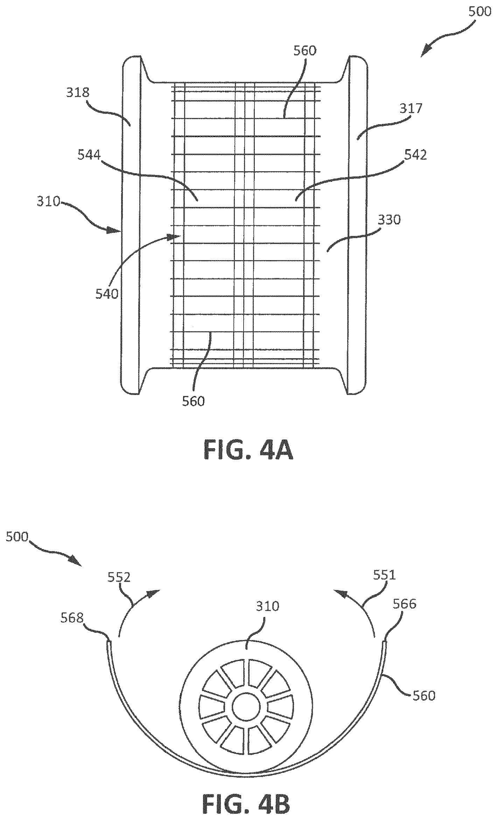

With reference to FIGS. 4A and 4B, in various embodiments, a wheel assembly 500 may comprise a heat insulator 540 comprising one or more parts. For example, heat insulator 540 may be split into two pieces, which may comprise an inner heat insulator 542 and/or an outer heat insulator 544. A heat insulator may be split into any number of parts, and each part may comprise the same or different material(s) as other parts, or the heat insulator, such as heat insulator 340 in FIG. 3 may be one piece of material.

With further reference to FIGS. 4A and 4B, in various embodiments, wheel assembly 500 may comprise an insulator fastening device 560 which may be coupled to heat insulator 540 circumferentially around wheel 310. Insulator fastening device 560 may be a solid piece of material, or may be a material comprising a net configuration, having voids in the material making up insulator fastening device 560. Insulator fastening device 560 may be configured to secure heat insulator 540 to wheel 310 and/or protect heat insulator 540.

Referring to FIG. 4B, in various embodiments, insulator fastening device 560 may be a solid ring and/or loop of material that is slid over heat insulator 540. Stated another way, insulator fastening device 560 may be a continuous loop without ends. In various embodiments, insulator fastening device 560 may be coupled to the wheel 310 and/or the heat insulator by wrapping insulator fastening device 560 around wheel 310 and/or the heat insulator. For example, insulator fastening device 560 may comprise a fastening first end 566 which may be wrapped in direction 551 and a fastening second end 568 which may be wrapped in direction 552. Fastening first end 566 and fastening second end 568 may meet, overlap one another, and/or not meet when insulator fastening device 560 is wrapped around wheel 310.

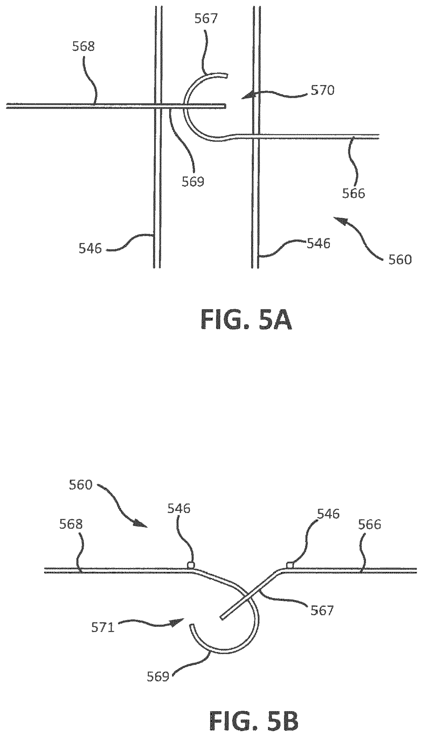

In various embodiments, fastening first end 566 may be coupled to fastening second end 568 in any suitable manner. For example, fastening first end 566 and fastening second end 568 may be coupled by being hooked, linked, nailed, screwed, adhered, and/or the like. Additionally, insulator fastening device 560 may be coupled to the heat insulator in any suitable manner such as being nailed, screwed, adhered to the heat insulator, and/or the like. With reference to FIGS. 5A and 5B, FIG. 5A depicts a top view of the ends of an insulator fastening device, and FIG. 5B depicts a side view of the ends of an insulator fastening device. In various embodiments, fastening first end 566 may comprise a first hook 567, and/or fastening second end 568 may comprise a second hook 569. First hook 567 may comprise a shape that is complementary to second hook 569 so first hook 567 may receive second hook 569 to couple fastening first end 566 to fastening second end 568. Second hook 569 may comprise any suitable shape and first hook 567 may be any shape complementary to second hook 569. In various embodiments, fastening second end 568 may comprise any structure which may be coupled to a structure comprised on fastening first end 566.

In various embodiments, fastening first end 566 may be coupled to fastening second end 568 in any suitable manner, such as by the hooked manner depicted in FIGS. 5A and 5B. In response, insulator fastening device 560 may be tightened from position 570 to position 571, and ends 546, of the heat insulator and/or the insulator fastening device, may be closer together in an embodiment in which the heat insulator is a piece of material comprising ends to better secure insulator fastening device 560 to heat insulator 540, and to better secure heat insulator 540 to the wheel. In various embodiments, the heat insulator may be one continuous piece of material, and therefore, may not have ends 546. Insulator fastening device 560 may nevertheless be tightened from position 570 to position 571 to bring fastening first end 566 closer to fastening second end 568, to better secure the heat insulator to the wheel.

In various embodiments, insulator fastening device 560 may be comprised of any suitable material such as mineral rope. Mineral rope may be comprised of, for example, carbon fibers, asbestos fibers, and/or any other suitable material that is resistant to high temperature (e.g., 1100°F (593°C) and above). In various embodiments, insulator fastening device 560 may be comprised of metal(s) and/or metal alloy(s) such as steel. Insulator fastening device 560 may be comprised of any number and/or combination of materials including, but not limited to, the materials discussed herein.

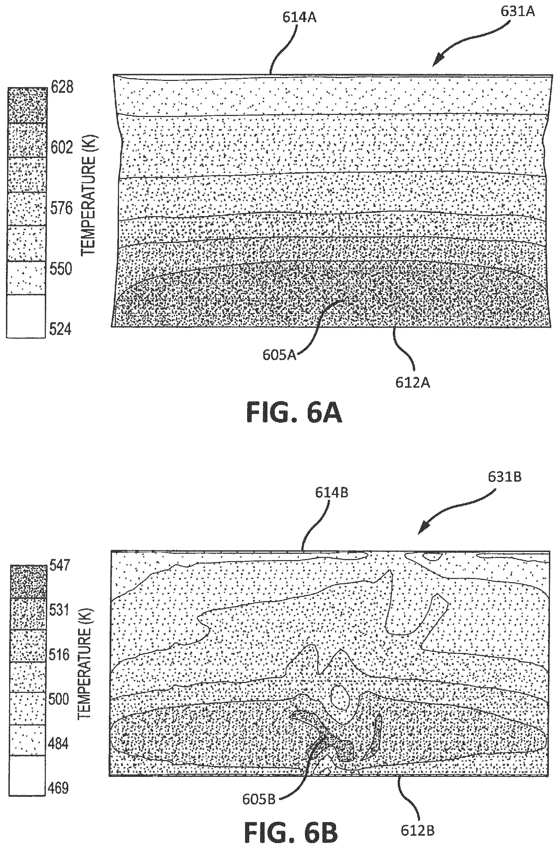

Referring to FIGS. 6A and 6B, interface 631A between an outer diameter surface and a tire cavity of a wheel assembly and interface 631B between a heat insulator and a tire cavity of a wheel, respectively, are depicted showing the temperature distributions for each. Interface 631A of FIG. 6A may be comprised in a wheel assembly that does not comprise a heat insulator coupled to the outer diameter surface of the wheel. In such a case, during brake operation, heat may be passed from the brake assembly to the tire cavity uninhibited by a heat insulator, resulting in a large temperature gradient (e.g., temperatures at interface 631A between 628 Kelvin (671°F, 355°C) and 524 Kelvin (484°F, 251°C)) and an unequal temperature distribution (inboard side 612A being much hotter than outboard side 614A, a difference of about 88 Kelvin (159°F, 88°C). The hottest area 605A at interface 631A has a temperature of 628 Kelvin (671°F, 355°C), which may be a significant area of interface 631A. On the other hand, interface 631B of FIG. 6B, in accordance with various embodiments, may be in a wheel assembly comprising a heat insulator coupled to the outer diameter surface of the wheel. In such a case, during brake operation, heat may be transferred from the brake assembly to 631B to the tire cavity. However, because of heat transfer reduction by the heat insulator, the temperature gradient at interface 631B may be less than that at interface 631A (e.g., temperatures at interface 631B between 547 Kelvin (525°F, 274°C) and 469 Kelvin (385°F, 169°C)), and interface 631B may comprise a more equal temperature distribution (the temperatures of inboard side 612B and outboard side 614B are closer than those at interface 631A, e.g., a difference of about 22 Kelvin (38°F, 22°C). The hottest area 605B at interface 631B has a temperature of 547 Kelvin (525°F, 274°C) over a smaller area of interface 631B than the area of the hottest temperature on interface 631 A, with cooler temperatures throughout interface 631B. Therefore, FIGS. 6A and 6B demonstrate the efficacy of a heat insulator in a wheel assembly.

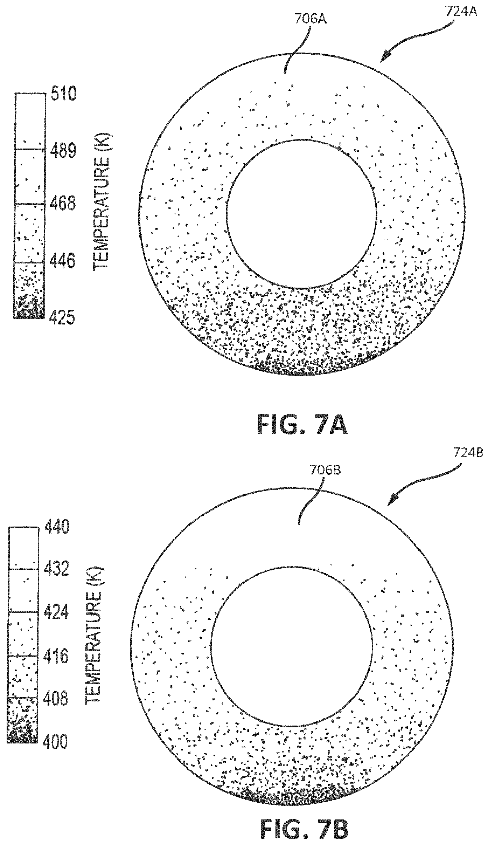

FIGS. 7A and 7B depict cross sectional views of tire cavities 724A and 724B, respectively, filled with nitrogen gas. FIG. 7A depicts a tire cavity 724A comprised in a wheel assembly without a heat insulator coupled to the wheel. FIG. 7B depicts a tire cavity 724B comprised in a wheel assembly comprising a heat insulator coupled to the wheel, in accordance with various embodiments. Tire cavity 724A has a larger temperature gradient and a more unequal temperature distribution than tire cavity 724B (e.g., temperatures of the nitrogen gas in tire cavity 724A ranging from 510 Kelvin (458°F, 237°C) to 425 Kelvin (305°F, 152°C), while temperatures of the nitrogen gas in tire cavity 724B range from 440 Kelvin (332°F, 167°C) to 400 Kelvin (260°F, 127°C). Therefore, FIGS. 7A and 7B further demonstrate the efficacy of a heat insulator in a wheel assembly.

The heat insulator's efficacy, such as heat insulator 340, may be shown through an example using the ideal gas law, PV = nRT, where P is the pressure of the gas, V is the volume of the gas, n is the number of moles of the gas, R is a gas constant (8.314 m³*Pa/(mol*K), and T is the temperature of the gas. In a steady state simulation for an exemplary aircraft wheel assembly comprising no heat insulator, a first temperature (T1) may be 300 Kelvin (80°F, 27°C), a second temperature (T2) may be 470 Kelvin (386°F, 197°C), a first pressure (P1) may be 236 psi (1.627 MPa), a gas volume of 0.36 m³, and moles of gas may be 237.32 moles, giving a second pressure (P2) at the second temperature of 369 psi (2.55 MPa), calculated by the equation P2 = P1 + (nR(T2-T1))/V. Therefore, the change in pressure is 133 psi or 0.92 MPa between T1 and T2.

In a steady state simulation for the exemplary aircraft wheel assembly comprising a heat insulator, such as heat insulator 340 in FIG. 3, a first temperature (T1) may be 300 Kelvin (80°F, 27°C), a second temperature (T2) may be 423 Kelvin (302°F, 150°C), a first pressure (P1) may be 236 psi (1.627 MPa), a gas volume of 0.36 m³, and moles of gas may be 225.38 moles, giving a second pressure (P2) at the second temperature of 333 psi (2.30 MPa), calculated by the equation P2 = P1 + (nR(T2-T1))/V. Therefore, the change in pressure is 97 psi or 0.67 MPa. The presence of a heat insulator comprised in the wheel assembly results in a change-in-pressure reduction of 27% (reduced from a difference between P1 and P2 of 133 psi or 0.92 MPa, to a difference between P1 and P2 of 97 psi or 0.67 MPa).

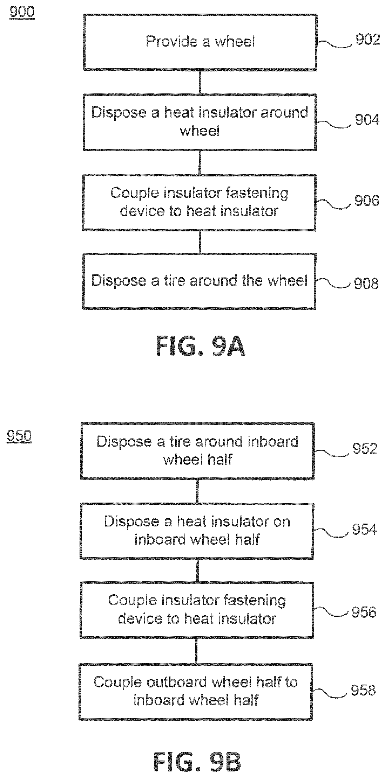

FIG. 9A illustrates a method 900 for assembling a wheel assembly, in accordance with various embodiments. With combined reference to FIGS. 4A, 4B, and 9A, in various embodiments, a wheel 310 may be provided (step 902). A heat insulator 540 may be disposed around and/or coupled to wheel 310 (step 904). Heat insulator 540 may be one continuous piece of material, or heat insulator 540 may be split circumferentially into any number of components, such as an inner heat insulator 542 and/or an outer heat insulator 544. In various embodiments, heat insulator 540 may comprise ends 546 (as depicted in FIGS. 5A and 5B) and may be wrapped around wheel 310. In various embodiments, an insulator fastening device 560 may be coupled to heat insulator 540 (step 906) in any suitable manner, including those described herein. A tire may be disposed around wheel 310 (step 908) such that heat insulator 540 and/or insulator fastening device 560 is/are adjacent to the tire cavity.

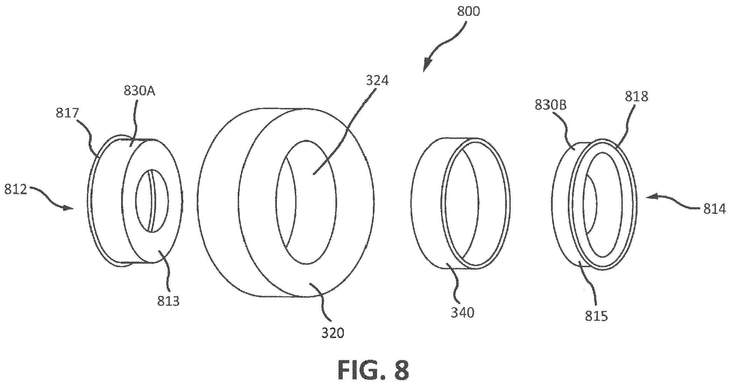

FIG. 9B illustrates a method 950 for assembling a wheel assembly, in accordance with various embodiments. With combined reference to FIG. 8 depicting a wheel assembly 800, in accordance with various embodiments, a tire 320 may be disposed circumferentially around an inboard wheel half 813 (step 952). In various embodiments, heat insulator 340 may be disposed circumferentially on inboard wheel half 813 (step 954) such that heat insulator 340 is located between inboard wheel half 813 and tire 320. Heat insulator 340 may be adjacent to tire cavity 324.

In various embodiments, with combined reference to FIGS. 4A, 4B, and 9B, insulator fastening device 560 may be coupled to heat insulator 340 (step 956). Insulator fastening device 560 may be coupled to heat insulator 340 in any suitable manner, including those discussed herein.

Returning to FIGS. 8 and 9B, in various embodiments, outboard wheel half 815 may be coupled to inboard wheel half 813 (step 958). Outboard wheel half 815 may be coupled to inboard wheel half 813 in any suitable manner such as bolting, welding, locking, wedging, and/or the like. Outboard wheel half 815 may be coupled between inboard wheel half 813 and heat insulator 340. In various embodiments, inboard wheel half 813 and outboard wheel half 815 may be coupled before heat insulator 340 is disposed on any part of the wheel. Inboard wheel half 813 and outboard wheel half 815 may make up a wheel body, such as wheel body 311 depicted in FIG. 3. In various embodiments, inboard wheel half 813 and outboard wheel half 815 may be integral with one another to form a wheel body, meaning one continuous piece of material, such as wheel body 311 in FIG. 3. In such a case, tire 320 and/or heat insulator 340 may be coupled circumferentially around the wheel body comprised of inboard wheel half 813 and outboard wheel half 813 in a method for assembling a wheel assembly, such as method 900 in FIG. 9A. In various embodiments, heat insulator 340 may be one continuous circle and/or loop of material that is slid onto the wheel body. In various embodiments, heat insulator 340 may be a strip of material that may be wrapped around the wheel body such that the ends of heat insulator 340, such as ends 546 depicted in FIGS. 5A and 5B, meet or otherwise couple.

In various embodiments, inboard wheel half 813 may comprise inboard outer diameter surface 830A and outboard wheel half 815 may comprise outboard outer diameter surface 830B. Together inboard outer diameter surface 830A and outboard outer diameter surface 830B may create an outer diameter surface, such as outer diameter surface 330 in FIG. 3, for example. Heat insulator 340 may be disposed on the outer diameter surface comprised of both inboard outer diameter surface 830A and outboard outer diameter surface 830B.

In various embodiments, inboard wheel half 813 may comprise an inboard side 812 and an inner rim 817. Outboard wheel half 815 may comprise an outboard side 814 and an outer rim 818. Heat insulator 340 may be disposed between inner rim 817 and outer rim 818.

Additionally, benefits, other advantages, and solutions to problems have been described herein with regard to various embodiments. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, and C" or "at least one of A, B, or C" is used in the claims or specification, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

As used herein, the terms "for example," "for instance," "such as," or "including" are meant to introduce examples that further clarify more general subject matter. Unless otherwise specified, these examples are embodiments of the present disclosure, and are not meant to be limiting in any fashion.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A wheel (310), comprising:
a wheel body comprising an outer diameter surface;
an inner rim (317) on an inboard side of the wheel body;
an outer rim (318) on an outboard side of the wheel body opposite the inner rim; and
a heat insulator (340) coupled to the outer diameter surface between the inner rim (317) and the outer rim (318).

2. The wheel of claim 1, further comprising a recess (326) disposed in the outer diameter surface.

3. The wheel of claim 2, wherein the heat insulator (340) is disposed within the recess (326).

4. The wheel of claim 1, wherein the heat insulator (340) comprises at least one of mineral fiber or high temperature insulation wool, and preferably wherein the mineral fiber is stone wool, and/or wherein the high temperature insulation wool comprises at least one of alkaline earth silicate wool or alumino silicate wool.

5. The wheel of claim 1, wherein the heat insulator (340) comprises at least one of carbon fiber or asbestos.

6. A wheel assembly (300), comprising:
a wheel body comprising an outer diameter surface;
an inner rim (317) on an inboard side of the wheel body;
an outer rim (318) on an outboard side of the wheel body opposite the inner rim (317);
a heat insulator (340) coupled to the outer diameter surface; and
a tire (320) comprising a tire perimeter and a tire cavity, the tire being disposed circumferentially around the wheel body between the inner rim and the outer rim, wherein the tire cavity is defined by the tire perimeter and the outer diameter surface, wherein the heat insulator is disposed between the outer diameter surface and the tire cavity.

7. The wheel assembly of claim 6, wherein the wheel body comprises an inboard wheel half and an outboard wheel half.

8. The wheel assembly of claim 6, further comprising a recess (326) disposed in the outer diameter surface, and preferably wherein the heat insulator is disposed within the recess.

9. The wheel assembly of claim 6, wherein the heat insulator (340) comprises at least one of a mineral fiber or a high temperature insulation wool, and preferably wherein the mineral fiber is stone wool, and/or wherein the high temperature insulation wool comprises at least one of alkaline earth silicate wool or alumino silicate wool.

10. The wheel assembly of claim 6, wherein the heat insulator (340) comprises at least one of carbon fiber or asbestos.

11. The wheel assembly of claim 6, further comprising an insulator fastening device (560) disposed circumferentially around the wheel body between the tire cavity and the heat insulator, wherein the insulator fastening device is coupled to the heat insulator.

12. A method of assembling a wheel assembly, comprising;
providing a wheel comprising a wheel body and an outer diameter surface; and
disposing a heat insulator circumferentially onto the outer diameter surface of the wheel.

13. The method of claim 12, further comprising coupling an outboard wheel half to an inboard wheel half to form the wheel body.

14. The method of claim 12, further comprising coupling an insulator fastening device circumferentially around the heat insulator.

15. The method of claim 12, wherein during the disposing, the heat insulator comprises at least one of a mineral fiber, a high temperature insulation wool, a carbon fiber, or asbestos.
